# EUROPÄISCHE PATENTSCHRIFT

(11) **EP 3 885 635 B1**
(45) Veröffentlichungstag und Bekanntmachung des Hinweises auf die Patenterteilung: **13.03.2024**
(21) Anmeldenummer: 20205594.3
(22) Anmeldetag: 04.11.2020
(51) Int. Cl.: F16P 3/14

(54) **ÜBERWACHUNGSEINRICHTUNG ZUR ABSICHERUNG DES ZUGANGS ZU EINEM GEFAHRENBEREICH MIT EINEM SICHERHEITSSENSOR**
MONITORING DEVICE FOR SECURING ACCESS TO A DANGER ZONE WITH A SAFETY SENSOR
DISPOSITIF DE SURVEILLANCE PERMETTANT DE SÉCURISER L'ACCÈS À UNE ZONE DANGEREUSE À L'AIDE D'UN CAPTEUR DE SÉCURITÉ

(30) Priorität: 23.03.2020 DE 202020101548 U
(43) Veröffentlichungstag der Anmeldung: 29.09.2021
(73) Patentinhaber: Leuze electronic GmbH + Co. KG, 73277 Owen/Teck (DE)
(72) Erfinder: Eder, Alexander, 86928 Hofstetten (DE); Brunner, Rolf, 82223 Eichenau (DE)
(74) Vertreter: Ruckh, Rainer Gerhard

(56) Entgegenhaltungen:
- WO-A1-2019/154862

## Beschreibung

Die Erfindung betrifft eine Überwachungseinrichtung und ein Verfahren zum Betrieb einer Überwachungseinrichtung.

Bekannte Überwachungseinrichtungen umfassen typischerweise Sensoranordnungen, die insbesondere als Sicherheits-Sensoranordnung ausgebildet ist, und damit für einen Einsatz im Bereich der Sicherheitstechnik geeignet ist. Die Sensoranordnung als Sicherheitssensor umfasst wenigstens einen Lichtvorhang, der typischerweise eine Reihenanordnung von Lichtstrahlen emittierenden Sendern in einem ersten Gehäuse und eine Reihenanordnung von Lichtstrahlen empfangenden Empfängern in einem zweiten Gehäuse aufweist.

Mit dem Lichtvorhang wird eine Überwachungsfunktion derart realisiert, dass in einer Auswerteeinheit des Lichtvorhangs die Empfangssignale der Empfänger ausgewertet werden und damit ein binäres Schaltsignal generiert wird, dessen Schaltzustände angeben ob ein Objekt in einem vom Lichtvorhang überwachten Schutzfeld vorhanden ist oder nicht. Wird ein Objekt im Schutzfeld detektiert, wird durch das dadurch generierte Schaltsignal eine Sicherheitsfunktion ausgelöst, beispielsweise eine mit dem Lichtvorhang überwachte, gefahrbringende Maschine oder Anlage stillgesetzt.

Ein typischer Anwendungsfall für eine derartige Sensoranordnung ist die Zugangsabsicherung zu einem Gefahrenbereich einer gefahrbringenden Maschine oder Anlage. Der Zugang zu dem Gefahrenbereich erfolgt über eine Fördereinheit, welche vom Lichtvorhang überwacht wird.

Die Überwachungsfunktion des Lichtvorhangs soll dann derart ausgebildet sein, dass ein Passieren von sicherheitskritischen Objekten, insbesondere Personen, vom Lichtvorhang erfasst wird, sodass zur Vermeidung von Gefahrensituationen die Sicherheitsfunktion ausgelöst wird.

Zulässige Objekte, das heißt allgemein nichtsicherheitskritische Objekte, wie zum Beispiel Werkstücke oder Ladegüter, die der Maschine oder Anlage zur Durchführung von Arbeitsprozessen zugeführt werden müssen, sollen jedoch nicht zur Auslösung der Sicherheitsfunktion führen um unnötige Stillstandzeiten der Maschine oder Anlage zu vermeiden.

Um dies zu erreichen ist für die Sensoranordnung in bekannter Weise eine Mutingfunktion vorgesehen.

Hierzu sind dem Lichtvorhang in Förderrichtung der Fördereinheit Mutingsensoren vorgeordnet, mit denen zulässige Objekte erfasst werden. Ist dies der Fall, wird die Überwachungsfunktion des Lichtvorhangs für eine vorgegebene Zeit gemutet, das heißt überbrückt, sodass die zulässigen Objekte den Lichtvorhang passieren können, ohne dass dieser ein Schaltsignal, das die Sicherheitsfunktion auslöst, generiert.

Die Mutingsensoren sind typischerweise in Form von optischen Sensoren ausgebildet, insbesondere in Form von Lichtschrankenanordnungen.

Mit derartigen Mutingsensoren kann ein nichtsicherheitskritisches Objekt wie ein Transportgut nur unvollständig erfasst werden. Typischerweise wird mit den bekannten Mutingsensoren nur die Höhe des nichtsicherheitskritischen Objekts oder allenfalls eine Kontur oder ein Abschnitt der Kontur des nichtsicherheitskritischen Objekts erfasst.

Dies führt zu einem gewissen Sicherheitsrisiko, da nicht zweifelsfrei festgestellt werden kann, ob sich nur das nichtsicherheitskritische Objekt im Erfassungsbereich befindet oder ob gegebenenfalls zusätzlich ein sicherheitskritisches Objekt in der Nähe des nichtsicherheitskritischen Objekts vorhanden ist, beispielsweise eine Person, die neben dem nichtsicherheitskritischen Objekt steht oder auf diesem aufsitzt.

Der letztere Fall stellt ein erhebliches Gefährdungsrisiko dar, da bei Erkennen des nichtsicherheitskritischen Objekts der Sicherheitssensor gemutet wird, das heißt er wird überbrückt, so dass dieser keine Sicherheitsfunktion mehr auslöst. Das am nichtsicherheitskritischen Objekt vorhandene sicherheitskritische Objekt, insbesondere eine Person, kann dann den Sicherheitssensor passieren, ohne dass die Sicherheitsfunktion ausgelöst wird, so dass die Person einer Gefahrensituation ausgesetzt ist.

Ein genereller Nachteil bei bekannten Muting-Verfahren besteht weiterhin darin, dass neben dem zulässigen Objekt im Schutzfeld Lücken entstehen können, sodass zum Beispiel eine Person neben dem zulässigen Objekt im Schutzfeld angeordnet sein kann. Die Aktivierung der Mutingfunktion stellt in diesem Fall eine nicht kontrollierte Gefahrensituation dar, da sich die Person oder allgemein ein sicherheitskritisches Objekt im Schutzfeld aufhält, ohne dass dadurch vom Lichtvorhang die erforderliche Sicherheitsfunktion ausgelöst wird.

Die WO 2019/154862 A1 betrifft eine Überwachungseinrichtung zur Überwachung eines Grenzbereichs einer Sicherheitszone. Die Überwachungseinrichtung umfasst einen Lichtvorhang zur Detektion eines Objekts an dem Grenzbereich. Zudem ist wenigstens ein Radarsensor vorgesehen, der Bewegungen von Objekten detektiert. Schließlich ist eine Auswerteeinheit vorgesehen, die abhängig von Signalen des Lichtvorhangs und des Radarsensors ein Ausgangssignal generiert. Insbesondere wird abhängig von Signalen des Lichtvorhangs und des Radarsensors eine Mutingfunktion realisiert.

Der Erfindung liegt die Aufgabe zugrunde, die Funktionalität und die Sicherheit bei Gefahrenbereichsüberwachungen mittels einer Überwachungseinrichtung der eingangs genannten Art zu erhöhen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung zur Absicherung des Zugangs zu einem Gefahrenbereich mit einem Sicherheitssensor, welcher zur Überwachung eines Überwachungsbereichs ausgebildet ist. Bei Detektion eines Objekts mittels des Sicherheitssensors ist eine Sicherheitsfunktion auslösbar. Dem Sicherheitssensor ist ein Radarsensor vorgeordnet, mittels dessen ein Raumbereich des Zugangs überwacht wird, wobei mittels des Radarsensors nichtsicherheitskritische Objekte von sicherheitskritischen Objekten unterscheidbar sind, und wobei die Sicherheitsfunktion des Sicherheitssensors dann überbrückt wird, wenn mit dem Radarsensor nur ein nichtsicherheitskritisches Objekt im Raumbereich detektiert wird. Zwei Sicherheitssensoren sind vorgesehen, die beiderseits des vom Radarsensor überwachten Raumbereich angeordnet sind. Ein nichtsicherheitskritisches Objekt ist durch den Überwachungsbereich eines ersten Sicherheitssensors in den vom Radarsensor überwachten Raumbereich einfahrbar. Die Sicherheitsfunktion des zweiten Sicherheitssensors wird nur dann überbrückt, wenn mittels des Radarsensors festgestellt wird, dass im Raumbereich nur das nichtsicherheitskritische Objekt vorhanden ist, wobei das Einfahren des nichtsicherheitskritischen Objekts in den Raumbereich dadurch ermöglicht ist, dass die Sicherheitsfunktion des ersten Sicherheitssensors durch eine externe Mutingfunktion überbrückt ist.

Mit der erfindungsgemäßen Überwachungseinrichtung wird eine sichere Absicherung eines Zugangs zu einem Gefahrenbereich einer Anlage der Maschine, von der Gefahren ausgehen können, gewährleistet.

Der Sicherheitssensor bildet dabei eine fehlersichere Überwachungseinheit derart, dass dieser zur Auslösung einer Sicherheitsfunktion führt, wenn ein Objekteingriff in dem von Sicherheitssensoren überwachten Überwachungsbereich registriert wird.

Die Sicherheitsfunktion besteht vorzugsweise darin, dass die Anlage oder Maschine stillgesetzt wird, so dass von dieser keine Gefährdungen, insbesondere für Personen, mehr ausgehen können.

Ein wesentlicher Aspekt der Erfindung besteht darin, dass mit den Radarsensoren eine sichere Muting-Funktion bereitgestellt wird.

Wesentlich hierbei ist, dass mit dem Radarsensor nichtsicherheitskritische Objekte wie zum Beispiel Transportgüter in Form von Paletten und dergleichen sicher von sicherheitskritischen Objekten, insbesondere Personen, unterschieden werden können.

Dies wird erfindungsgemäß derart genutzt, um ein fehlersicheres und manipulationssicheres Muting bereitzustellen.

Mit dem Radarsensor kann sicher erfasst werden, ob sich im Raumbereich nur ein nichtsicherheitskritisches Objekt befindet oder zusätzlich auch ein sicherheitskritisches Objekt.

Nur wenn sich allein ein nichtsicherheitskritisches Objekt, oder gegebenenfalls auch mehrere nichtsicherheitskritische Objekte, jedoch kein sicherheitskritisches Objekt im Raumbereich befindet, wird der Sicherheitssensor überbrückt und das im Raumbereich befindliche nichtsicherheitskritische Objekt kann den Sicherheitssensor passieren, ohne dass eine Sicherheitsfunktion ausgelöst wird. Da durch den Radarsensor ausgeschlossen wird, dass bei einer Mutingfreigabe auch noch ein sicherheitskritisches Objekt im Raumbereich vorhanden war, werden dadurch bedingte Gefahrenzustände vermieden.

Bei der erfindungsgemäßen Überwachungseinrichtung wird die Eigenschaft des Radarsensors ausgenutzt, dass mit diesem Bewegungen von Objekten, insbesondere auch deren Richtung und Geschwindigkeit, erfasst werden können. Durch die Analyse der Art der Bewegungen können unterschiedliche Objekte klassifiziert werden. Bewegt sich beispielsweise eine Palette oder allgemein ein Transportgut als nichtsicherheitskritisches Objekt im Bereich des Zugangs, so bewegt sich dieses gleichförmig. Eine solche gleichförmige Bewegung kann von nicht gleichförmigen Bewegungen, wie sie eine Person ausführt, sicher unterschieden werden.

Durch eine zeitaufgelöste Auswertung der Sensorsignale des Radarsensors können so sich unterschiedlich bewegende Objekte, wie zum Beispiel Transortgüter und Personen oder allgemein nichtsicherheitskritische Objekte und sicherheitskritische Objekte, sicher unterschieden werden.

Generell basiert die Erkennung von Bewegungen von Objekten mittels des oder eines Radarsensors auf dem Doppler Effekt. Dabei wird die Frequenz eines ausgesendeten Radarsignals kontinuierlich über ein Frequenzband variiert und mit der Frequenz des vom Objekt zurückreflektierten Radarsignals verglichen.

Durch den ermittelten Frequenzunterschied kann die Laufzeit des Radarsignals zu einem Objekt und zurück zum Radarsensor ermittelt werden, wodurch die Objektdistanz bestimmt wird.

Vorteilhaft kann der Radarsensor nach dem FMCW (frequency modulated continous wave) Verfahren arbeiten.

Die erfindungsgemäße Überwachungseinrichtung kann generell auch mehrere Radarsensoren aufweisen. Dabei ist dem oder den Radarsensoren eine Auswerteeinheit zugeordnet, welche zur Auswertung von Sensorsignalen der Radarsensoren ausgebildet ist.

Gemäß einer vorteilhaften Ausgestaltung ist der Zugang von einer Fördereinheit gebildet, auf welcher nichtsicherheitskritische Objekte dem Gefahrenbereich zuführbar oder aus diesen herausführbar sind.

Auf der Fördereinheit können als nichtsicherheitskritische Objekte Transportgüter wie zum Beispiel Paletten einer Anlage oder Maschine zugeführt werden, von welcher Gefahren für Personen ausgehen können.

Der Radarsensor ist dann in Förderrichtung der Fördereinheit dem Sicherheitssensor vorgeordnet, so dass mit dem Radarsensor nichtsicherheitskritische Objekte identifiziert werden, bevor sie den Sicherheitssensor erreichen. Mit dem Radarsensor kann dann, wenn nur ein nichtsicherheitskritisches Objekt im Raumbereich detektiert wird, der Sicherheitssensor gemutet, das heißt überbrückt werden, so dass dann das nichtsicherheitskritische Objekt die Sicherheitssensoren passieren kann, ohne dass die Sicherheitsfunktion ausgelöst wird. Das nichtsicherheitskritische Objekt kann somit der Anlage zugeführt werden, ohne dass deren Betrieb unnötig unterbrochen wird.

Erfindungsgemäß sind zwei Sicherheitssensoren vorgesehen, die beidseits des am Radarsensor überwachten Raumbereichs angeordnet sind.

Die beiden Sicherheitssensoren bilden mit dem Radarsensor eine Schleuse mit dem nicht nur die Einfahrt eines nichtsicherheitskritischen Objekts in einen Gefahrenbereich einer Anlage oder Maschine kontrolliert wird, sondern auch das Herausfahren aus dem Gefahrenbereich.

Dabei ist die Funktionsweise der Überwachungseinrichtung derart, dass ein nichtsicherheitskritisches Objekt durch den Überwachungsbereich eines ersten Sicherheitssensors in den vom Radarsensor überwachten Raumbereich einfahrbar ist. Die Sicherheitsfunktion des zweiten Sicherheitssensors wird nur dann überbrückt, wenn mittels des Radarsensors festgestellt wird, dass im Raumbereich nur das nichtsicherheitskritische Objekt vorhanden ist.

Dabei ist das Einfahren des nichtsicherheitskritischen Objekts in den Raumbereich dadurch ermöglicht sein, dass die Sicherheitsfunktion des ersten Sicherheitssensors durch eine externe Mutingfunktion überbrückt ist.

Sowohl bei einem Einfahren als auch Herausfahren eines nichtsicherheitskritischen Objekts in beziehungsweise aus dem Gefahrenbereich wird der jeweils erste Sicherheitssensor freigegeben, insbesondere durch ein externes Muting. Dieses externe Muting kann über die Steuerung der Fördereinrichtung erfolgen, in welcher die Fördergeschwindigkeit und die Zeitpunkte der Zuführungen von nichtsicherheitskritischen Objekten zu den Sicherheitssensoren bekannt sind. Abhängig von diesen Daten kann der erste Sicherheitssensor überbrückt werden.

Befindet sich dann das nichtsicherheitskritische Objekt im Raumbereich, wird dieses nichtsicherheitskritische Objekt mit den Radarsensoren erfasst um festzustellen, ob sich zusätzlich zum nichtsicherheitskritischen Objekt noch ein sicherheitskritisches Objekt im Raumbereich aufhält.

Diese Unterscheidung ist dann messtechnisch besonders vorteilhaft, wenn das nichtsicherheitskritische Objekt angehalten wird, sobald es in den Raumbereich eingefahren wird.

Dies ist jedoch keinesfalls zwingend.

Sobald mit dem Radarsensor verifiziert ist, dass sich nur das nichtsicherheitskritische Objekt im Raumbereich aufhält, wird der zweite Sicherheitssensor gemutet und das nichtsicherheitskritische Objekt kann aus der Schleuse ausfahren, ohne dass der Sicherheitssensor eine Sicherheitsfunktion auslöst.

Gemäß einer vorteilhaften Ausgestaltung ist der oder jeder Sicherheitssensor von einem optischen Sensor gebildet.

Insbesondere ist der optische Sensor ein Lichtgitter, ein Lichtvorhang, eine Lichtschrankenanordnung oder ein Flächendistanzsensor.

Die Erfindung wird im Folgenden anhand der Zeichnungen erläutert. Es zeigen:
- Figur 1:: Erstes Ausführungsbeispiel der erfindungsgemäßen Überwachungseinrichtung in einer Draufsicht von oben.
- Figur 2:: Anordnung gemäß Figur 1 in einer Seitenansicht.
- Figur 3:: Zweites Ausführungsbeispiel der erfindungsgemäßen Überwachungseinrichtung in einer Draufsicht von oben.
- Figur 4:: Anordnung gemäß Figur 3 in einer Seitenansicht.
- Figur 5:: Ausführungsbeispiel eines Radarsensors für die Überwachungseinrichtung gemäß den Figuren 1 - 4.

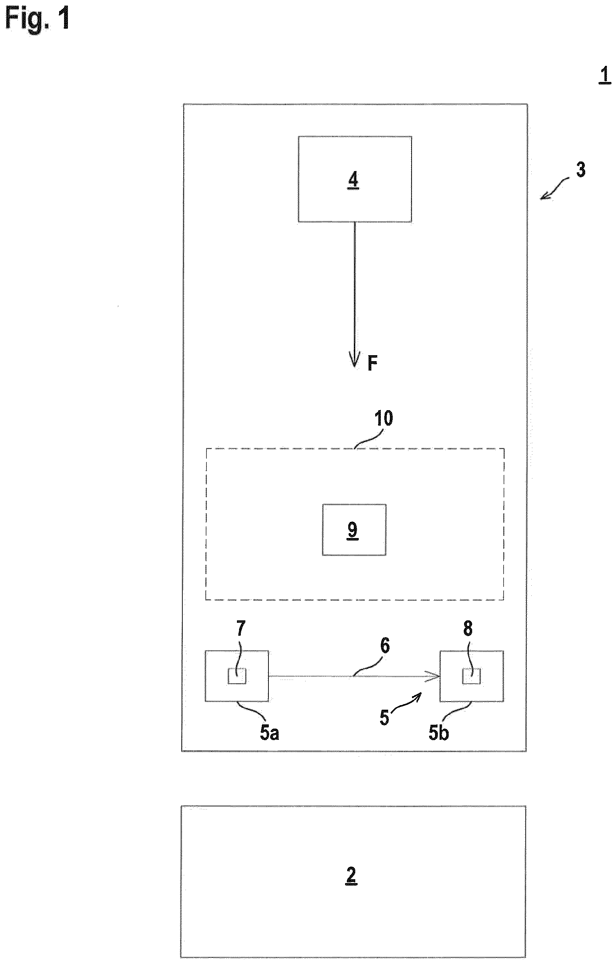

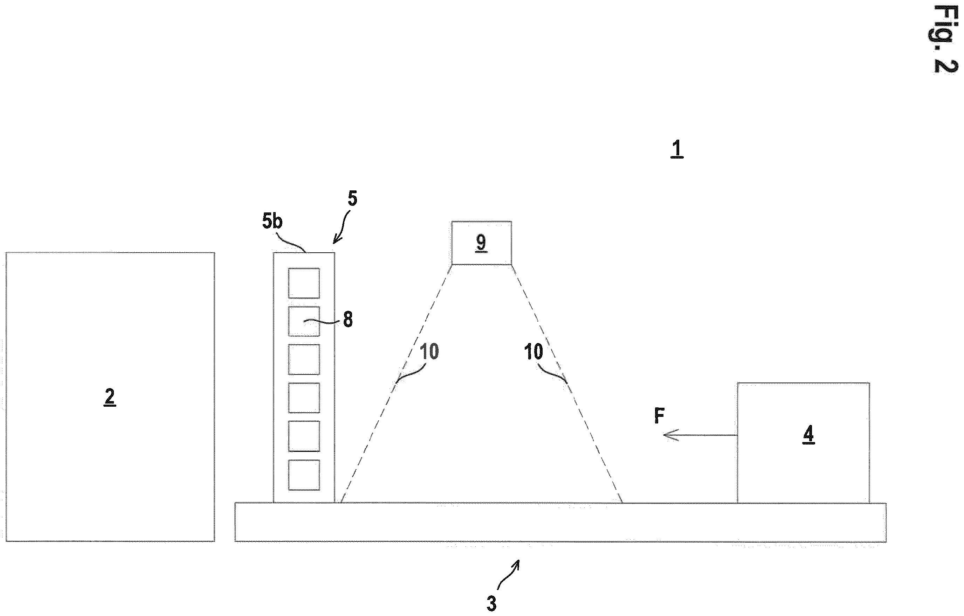

Die Figuren 1 und 2 zeigen ein erstes Ausführungsbeispiel einer Überwachungseinrichtung 1 zur Absicherung eines Zugangs zu einem Gefahrenbereich an einer Anlage 2, von welcher Gefahren für Personen ausgehen können. Der Zugang wird im vorliegenden Fall von einer Fördereinheit 3 gebildet, die in Form eines Förderbands oder einer Rollenbahn ausgebildet sein kann. Die Fördereinheit 3 kann seitlich durch nicht dargestellte Umzäunungen gesichert sein.

Auf der Fördereinheit 3 werden Transportgüter wie zum Beispiel Paletten 4 transportiert um diese der Anlage 2 zuzuführen, damit diese Arbeitsvorgänge durchführen kann.

Als Zugangssicherung ist bei der Ausführungsform der Figuren 1 und 2 ein Sicherheitssensor vorgesehen, der im vorliegenden Fall als Lichtvorhang 5 ausgebildet ist. Zur Erfüllung der normativen Aufwendungen für den Einsatz im Bereich der Sicherheitstechnik weist der Sicherheitssensor einen fehlersicheren Aufbau auf. Der Lichtvorhang 5 weist in bekannter Weise ein erstes Gehäuse 5a mit einer Reihenanordnung von Lichtstrahlen 6 emittierenden Lichtsendern 7 sowie ein zweites Gehäuse 5b mit einer Reihenanordnung von Lichtstrahlen 6 empfangenden Lichtempfängern 8 auf. Die Gehäuse 5a, 5b sind an gegenüberliegenden Rändern der Fördereinheit 3 angebracht. Die Längsachsen der Gehäuse 5a, 5b verlaufen in vertikaler Richtung und damit senkrecht zur Oberseite der Fördereinheit 3.

Mit dem Sicherheitssensor wird ein flächiger Überwachungsbereich überwacht. Bei freiem Überwachungsbereich treffen die Lichtstrahlen 6 aller Lichtsender 7 ungehindert auf die zugeordneten Lichtempfänger. Ein Objekteingriff im Überwachungsbereich wird durch Unterbrechung der Lichtstrahlen 6 wenigstens eines Lichtsenders 7 erfasst. Im Sicherheitssensor wird ein binäres Schaltsignal generiert, dessen Schaltzustände angeben ob sich ein Objekt im Überwachungsbereich befindet oder nicht.

Ist der Überwachungsbetrieb des Lichtvorhangs 5 aktiviert, wird bei Detektion eines Objekteingriffs im Überwachungsbereich mittels des dadurch generierten Schaltsignals eine Sicherheitsfunktion ausgelöst. Insbesondere kann als Sicherheitsfunktion das Stillsetzen der Anlage 2 vorgesehen sein. Hierzu wird das Schaltsignal des Lichtvorhangs 5 an eine die Anlage 2 steuernde Steuereinheit ausgegeben.

Damit werden Gefährdungen von Personen oder allgemein sicherheitskritische Objekte verhindert, da dann, wenn diese den Sicherheitssensor passieren, die Anlage 2 stillgesetzt wird.

Jedoch ist ein Stillsetzen der Anlage 2 unerwünscht, wenn ein nichtsicherheitskritisches Objekt wie eine Palette 4 oder allgemein ein Transportgut den Lichtvorhang 5 passiert. Um in diesem Fall ein Stillsetzen der Anlage 2 zu vermeiden, wird der Lichtvorhang 5, das heißt dessen Überwachungsbetrieb, gemutet, das heißt überbrückt, so dass dann, wenn ein nichtsicherheitskritisches Objekt den Überwachungsbereich des Lichtvorhangs 5 passiert, dieser Lichtvorhang 5 keine Sicherheitsfunktion auslöst.

Als Mutingsensor ist im vorliegenden Fall ein Radarsensor 9 vorgesehen, mit dem ein Raumbereich 10 überwacht wird, der in Förderrichtung F dem Überwachungsbereich des Lichtvorhangs 5 vorgelagert ist. Die Sensorsignale des Radarsensors 9 werden in einer nicht dargestellten Auswerteeinheit ausgewertet. Generell können auch mehrere Radarsensoren 9 zur Überwachung des Raumbereichs 10 vorgesehen sein, die an die Auswerteeinheit angeschlossen sind. Die Auswerteeinheit kann einen redundanten, fehlersicheren Aufbau aufweisen.

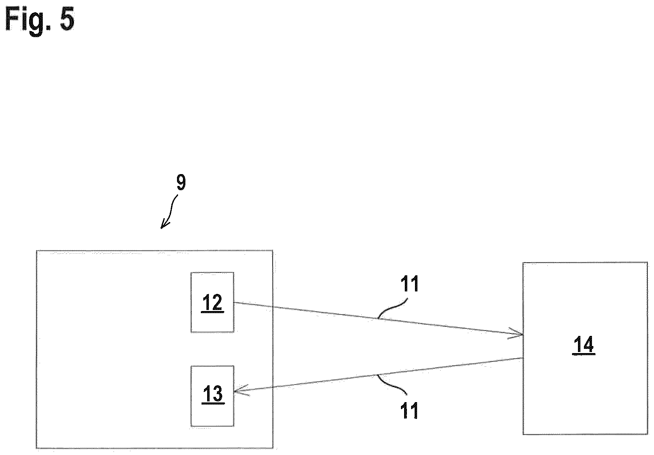

Figur 5 zeigt schematisch den Aufbau eines Radarsensors 9. Der Radarsensor 9 weist einen Radarsignale 11 emittierenden Sender 12 und einen Empfänger 13, der von einem Zielobjekt 14 zurück reflektierte Radarsignale 11 empfängt, auf.

Mit dem Radarsensor 9 können generell Bewegungen von Objekten erfasst werden.

Generell basiert die Erkennung von Bewegungen von Objekten mittels des oder eines Radarsensors 9 auf dem Doppler Effekt. Dabei wird die Frequenz eines ausgesendeten Radarsignals 11 kontinuierlich über ein Frequenzband variiert und mit der Frequenz des vom Objekt zurückreflektierten Radarsignals 11 verglichen. Durch den ermittelten Frequenzunterschied kann die Laufzeit des Radarsignals 11 zu einem Objekt und zurück zum Radarsensor 9 ermittelt werden, wodurch die Objektdistanz bestimmt wird.

Vorzugsweise arbeitet der Radarsensor 9 nach dem FMCW (frequency modulated continous wave) Verfahren.

Das Muting erfolgt derart, dass das nichtsicherheitskritische Objekt, das heißt die Palette 4 in Förderrichtung F in den Raumbereich 10 eingefahren wird. Dort wird das nichtsicherheitskritische Objekt angehalten, was jedoch nicht zwingend ist.

Mit dem Radarsensor 9 wird durch das Ermitteln von Objekt-Bewegungsprofilen festgestellt, ob sich nur das nichtsicherheitskritische Objekt im Raumbereich 10 befindet oder ob zusätzlich ein sicherheitskritisches Objekt wie eine Person im Raumbereich 10 vorhanden ist. Das nichtsicherheitskritische Objekt bewegt sich nicht oder regelmäßig, was von den unregelmäßigen Bewegungen eines sicherheitskritischen Objekts, insbesondere einer Person unterschieden werden kann. Prinzipiell kann sogar der Atem einer Person erfasst werden.

Wird mit dem Radarsensor 9 festgestellt, dass nur das nichtsicherheitskritische Objekt im Raumbereich 10 vorhanden ist, wird der Lichtvorhang 5 überbrückt und das nichtsicherheitskritische Objekt kann den Überwachungsbereich des Lichtvorhangs 5 passieren, ohne dass die Sicherheitsfunktion ausgelöst wird.

Das nichtsicherheitskritische Objekt kann so der Anlage 2 zugeführt werden, ohne dass deren Betrieb unterbrochen wird.

Wird dagegen mit dem Radarsensor 9 festgestellt, dass sich neben dem nichtsicherheitskritischen Objekt noch ein sicherheitskritisches Objekt im Raumbereich 10 aufhält, wird der Lichtvorhang 5 nicht gemutet. Dringt dann ein Objekt, insbesondere das sicherheitskritische Objekt in den Überwachungsbereich des Lichtvorhangs 5 ein, so löst dieser die Sicherheitsfunktion aus und die Anlage 2 wird stillgesetzt, wodurch Gefahrensituationen vermieden werden.

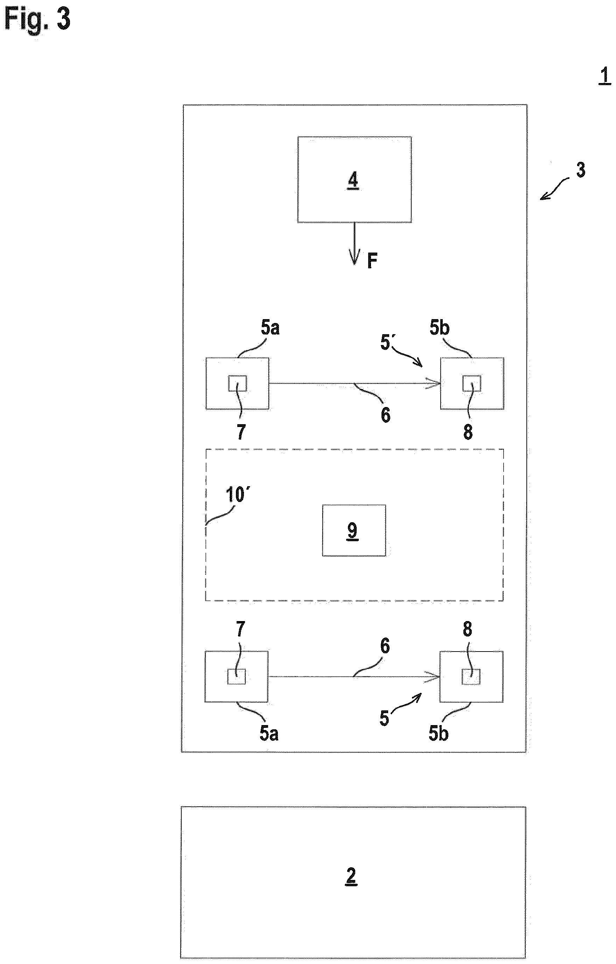

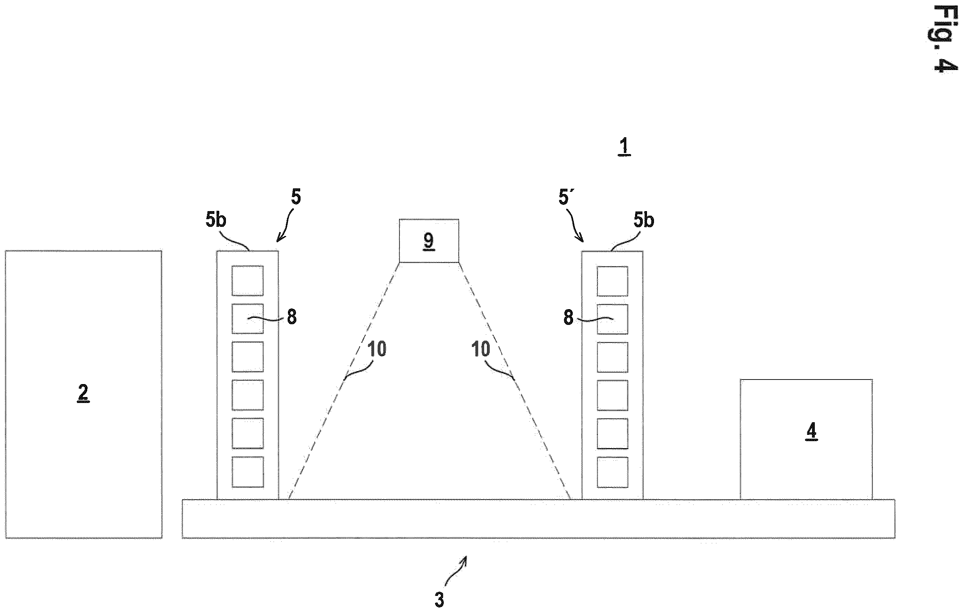

Die Figuren 3 und 4 zeigen ein zweites Ausführungsbeispiel der Überwachungseinrichtung 1. Diese unterscheidet sich von der Ausführungsform gemäß den Figuren 1 und 2 nur dadurch, dass zusätzlich ein dem vom Radarsensor 9 überwachten Raumbereich 10 ein zweiter Lichtvorhang 5` vorgeordnet ist, der identisch mit Lichtvorhang 5 ist.

Die beiderseits des vom Radarsensor 9 überwachten Raumbereich 10 angeordneten Sicherheitssensoren in Form der Lichtvorhänge 5, 5` bilden eine Schleuse, mittels derer sowohl das Einfahren von nichtsicherheitskritischen Objekten in den Gefahrenbereich der Anlage 2 als auch das Herausfahren von nichtsicherheitskritischen Objekten aus dem Gefahrenbereich kontrolliert werden kann.

Dabei ist die Funktionsweise der Überwachungseinrichtung 1 derart, dass ein nichtsicherheitskritisches Objekt durch den Überwachungsbereich eines ersten Sicherheitssensors in den vom Radarsensor 9 überwachten Raumbereich 10 einfahrbar ist und dass die Sicherheitsfunktion des zweiten Sicherheitssensors nur dann überbrückt wird, wenn mittels des Radarsensors 9 festgestellt wird, dass im Raumbereich 10 nur das nichtsicherheitskritische Objekt vorhanden ist.

Dabei kann das Einfahren des nichtsicherheitskritischen Objekts in den Raumbereich 10 dadurch ermöglicht sein, dass die Sicherheitsfunktion des ersten Sicherheitssensors durch eine externe Mutingfunktion überbrückt ist.

Sowohl bei einem Einfahren als auch Herausfahren eines nichtsicherheitskritischen Objekts in beziehungsweise aus dem Gefahrenbereich wird der jeweils erste Sicherheitssensor, das heißt Lichtvorhang 5 `, freigegeben, insbesondere durch ein externes Muting. Dieses externe Muting kann über die Steuerung der Fördereinrichtung erfolgen, in welcher die Fördergeschwindigkeit und die Zeitpunkte der Zuführungen von nichtsicherheitskritischen Objekten zu dem Sicherheitssensor bekannt sind. Abhängig von diesen Daten kann der erste Sicherheitssensor überbrückt werden.

Befindet sich dann das nichtsicherheitskritische Objekt im Raumbereich 10, wird dieses nichtsicherheitskritische Objekt mit den Radarsensoren 9 erfasst, um festzustellen ob sich zusätzlich zum nichtsicherheitskritischen Objekt noch ein sicherheitskritisches Objekt im Raumbereich 10 aufhält.

Diese Unterscheidung ist dann messtechnisch besonders vorteilhaft, wenn das nichtsicherheitskritische Objekt angehalten wird, sobald es in den Raumbereich 10 eingefahren wird.

Dies ist jedoch keinesfalls zwingend.

Sobald mit dem Radarsensor 9 verifiziert ist, dass sich nur das nichtsicherheitskritische Objekt im Raumbereich 10 aufhält, wird der zweite Sicherheitssensor, das heißt der Lichtvorhang 5, gemutet und das nichtsicherheitskritische Objekt kann aus der Schleuse ausfahren, ohne dass der Sicherheitssensor eine Sicherheitsfunktion auslöst.

### Bezugszeichenliste

- (1): Überwachungseinrichtung
- (2): Anlage
- (3): Fördereinheit
- (4): Palette
- (5): Lichtvorhang
- (5'): Lichtvorhang
- (5a): Gehäuse
- (5b): Gehäuse
- (6): Lichtstrahl
- (7): Lichtsender
- (8): Lichtempfänger
- (9): Radarsensor
- (10): Raumbereich
- (11): Radarsignal
- (12): Sender
- (13): Empfänger
- (14): Zielobjekt

## Patentansprüche

1. Überwachungseinrichtung (1) zur Absicherung des Zugangs zu einem Gefahrenbereich mit einem Sicherheitssensor, welcher zur Überwachung eines Überwachungsbereichs ausgebildet ist, wobei bei Detektion eines Objekts mittels des Sicherheitssensors eine Sicherheitsfunktion auslösbar ist, wobei dem Sicherheitssensor ein Radarsensor (9) vorgeordnet ist, mittels dessen ein Raumbereich (10) des Zugangs überwacht wird, wobei mittels des Radarsensors (9) nichtsicherheitskritische Objekte von sicherheitskritischen Objekten unterscheidbar sind, und wobei die Sicherheitsfunktion des Sicherheitssensors dann überbrückt wird, wenn mit dem Radarsensor (9) nur ein nichtsicherheitskritisches Objekt im Raumbereich (10) detektiert wird, **dadurch gekennzeichnet, dass** zwei Sicherheitssensoren vorgesehen sind, die beiderseits des vom Radarsensor (9) überwachten Raumbereichs (10) angeordnet sind, dass ein nichtsicherheitskritisches Objekt durch den Überwachungsbereich eines ersten Sicherheitssensors in den vom Radarsensor (9) überwachten Raumbereich (10) einfahrbar ist, und dass die Sicherheitsfunktion des zweiten Sicherheitssensors nur dann überbrückt wird, wenn mittels des Radarsensors (9) festgestellt wird, dass im Raumbereich (10) nur das nichtsicherheitskritische Objekt vorhanden ist, wobei das Einfahren des nichtsicherheitskritischen Objekts in den Raumbereich (10) dadurch ermöglicht ist, dass die Sicherheitsfunktion des ersten Sicherheitssensors durch eine externe Mutingfunktion überbrückt ist.

2. Überwachungseinrichtung (1) nach Anspruch 1, **dadurch gekennzeichnet, dass** das nichtsicherheitskritische Objekt angehalten wird, sobald es in den Raumbereich (10) eingefahren wird.

3. Überwachungseinrichtung (1) nach einem der Ansprüche 1 oder 2, **dadurch gekennzeichnet, dass** der Zugang von einer Fördereinheit (3) gebildet ist, auf welcher nichtsicherheitskritische Objekte dem Gefahrenbereich zuführbar oder aus diesem herausführbar sind.

4. Überwachungseinrichtung (1) nach einem der Ansprüche 1 bis 3, **dadurch gekennzeichnet, dass** diese mehrere Radarsensoren (9) aufweist.

5. Überwachungseinrichtung (1) nach einem der Ansprüche 1 bis 4, **dadurch gekennzeichnet, dass** dem oder den Radarsensoren (9) eine Auswerteeinheit zugeordnet ist, welche zur Auswertung von Sensorsignalen der Radarsensoren (9) ausgebildet ist.

6. Überwachungseinrichtung (1) nach einem der Ansprüche 1 bis 5, **dadurch gekennzeichnet, dass** mit dem oder den Radarsensoren (9) Bewegungen von Objekten erfassbar sind.

7. Überwachungseinrichtung (1) nach Anspruch 6, **dadurch gekennzeichnet, dass** anhand von mit dem oder den Radarsensoren (9) erfassten Objektbewegungen sicherheitskritische Objekte von nichtsicherheitskritischen Objekten unterschieden werden.

8. Überwachungseinrichtung (1) nach einem der Ansprüche 1 bis 7, **dadurch gekennzeichnet, dass** der oder jeder Sicherheitssensor von einem optischen Sensor gebildet ist.

9. Überwachungseinrichtung (1) nach Anspruch 8, **dadurch gekennzeichnet, dass** der optische Sensor ein Lichtgitter, ein Lichtvorhang (5), eine Lichtschrankenanordnung oder ein Flächendistanzsensor ist.

## Claims

1. A monitoring device (1) for securing access to a danger zone with a safety sensor which is designed to monitor a monitoring area, wherein a safety function can be triggered by means of the safety sensor when an object is detected, wherein a radar sensor (9) is arranged upstream of the safety sensor, by means of which a spatial area (10) of the access is monitored, wherein non-safety-critical objects can be distinguished from safety-critical objects by means of the radar sensor (9), and wherein the safety function of the safety sensor is bypassed if only one non-safety-critical object is detected in the spatial area (10) by means of the radar sensor (9), **characterised in that** two safety sensors are provided, which are arranged on both sides of the spatial area (10) monitored by the radar sensor (9), **in that** a non-safety-critical object can be moved through the monitoring area of a first safety sensor into the spatial area (10) monitored by the radar sensor (9), and **in that** the safety function of the second safety sensor is only bypassed when the radar sensor (9) detects a non-safety-critical object in the spatial area (10) monitored by the radar sensor (9), when the radar sensor (9) detects that only the non-safety-critical object is present in the spatial area (10), the non-safety-critical object being able to enter the spatial area (10) because the safety function of the first safety sensor is bypassed by an external muting function.

2. A monitoring device (1) according to claim 1, **characterised in that** the non-safety-critical object is stopped as soon as it is moved into the spatial area (10).

3. A monitoring device (1) according to one of claims 1 or 2, **characterised in that** the access is formed by a conveyor unit (3) on which non-safety-critical objects can be fed to or removed from the danger zone.

4. A monitoring device (1) according to one of claims 1 to 3, **characterised in that** it has a plurality of radar sensors (9).

5. A monitoring device (1) according to one of claims 1 to 4, **characterised in that** the radar sensor or sensors (9) is or are assigned an evaluation unit which is designed to evaluate sensor signals from the radar sensors (9).

6. A monitoring device (1) according to one of claims 1 to 5, **characterised in that** movements of objects can be detected with the radar sensor or sensors (9).

7. A monitoring device (1) according to claim 6, **characterised in that** safety-critical objects are distinguished from non-safety-critical objects on the basis of object movements detected by the radar sensor or sensors (9).

8. A monitoring device (1) according to one of claims 1 to 7, **characterised in that** the or each safety sensor is formed by an optical sensor.

9. A monitoring device (1) according to claim 8, **characterised in that** the optical sensor is a light grid, a light curtain (5), a light barrier arrangement or an area distance sensor.

## Revendications

1. Dispositif de surveillance (1) pour sécuriser l'accès à une zone dangereuse avec un capteur de sécurité qui est conçu pour surveiller une zone de surveillance, dans lequel une fonction de sécurité peut être déclenchée au moyen du capteur de sécurité lorsqu'un objet est détecté, dans lequel un capteur radar (9) est disposé en amont du capteur de sécurité, au moyen duquel une zone spatiale (10) de l'accès est surveillée, dans lequel le capteur radar (9) permet de distinguer les objets non critiques pour la sécurité des objets critiques pour la sécurité, et dans lequel la fonction de sécurité du capteur de sécurité est contournée si un seul objet non critique pour la sécurité est détecté dans la zone spatiale (10) au moyen du capteur radar (9), **caractérisé par le fait que** deux capteurs de sécurité sont prévus, qui sont disposés des deux côtés de la zone spatiale (10) surveillée par le capteur radar (9), en ce qu'un objet non critique pour la sécurité peut être déplacé à travers la zone de surveillance d'un premier capteur de sécurité dans la zone spatiale (10) surveillée par le capteur radar (9), et en ce que la fonction de sécurité du deuxième capteur de sécurité n'est contournée que lorsque le capteur radar (9) détecte un objet non critique pour la sécurité dans la zone spatiale (10) surveillée par le capteur radar (9), lorsque le capteur radar (9) détecte que seul l'objet non critique pour la sécurité est présent dans la zone spatiale (10), l'objet non critique pour la sécurité pouvant pénétrer dans la zone spatiale (10) parce que la fonction de sécurité du premier capteur de sécurité est contournée par une fonction d'inhibition externe.

2. Dispositif de surveillance (1) selon la revendication 1, **caractérisé en ce que** l'objet non critique pour la sécurité est arrêté dès qu'il est déplacé dans la zone spatiale (10).

3. Dispositif de surveillance (1) selon l'une des revendications 1 ou 2, **caractérisé en ce que** l'accès est formé par une unité de convoyage (3) sur laquelle des objets non critiques pour la sécurité peuvent être acheminés vers la zone dangereuse ou en être retirés.

4. Dispositif de surveillance (1) selon l'une des revendications 1 à 3, **caractérisé en ce qu'**il comporte une pluralité de capteurs radar (9).

5. Dispositif de surveillance (1) selon l'une des revendications 1 à 4, **caractérisé en ce que** le ou les capteurs radar (9) sont affectés d'une unité d'évaluation qui est conçue pour évaluer les signaux de capteur provenant des capteurs radar (9).

6. Dispositif de surveillance (1) selon l'une des revendications 1 à 5, **caractérisé en ce que** les mouvements des objets peuvent être détectés avec le ou les capteurs radar (9).

7. Dispositif de surveillance (1) selon la revendication 6, **caractérisé en ce que** les objets critiques pour la sécurité sont distingués des objets non critiques pour la sécurité sur la base des mouvements d'objets détectés par le ou les capteurs radar (9).

8. Dispositif de surveillance (1) selon l'une des revendications 1 à 7, **caractérisé en ce que** le ou chaque capteur de sécurité est formé par un capteur optique.

9. Dispositif de surveillance (1) selon la revendication 8, **caractérisé en ce que** le capteur optique est une grille lumineuse, un rideau lumineux (5), un arrangement de barrière lumineuse ou un capteur de distance de zone.
